Europäisches Patentamt

**European Patent Office**

Office européen des brevets

(19)

(11) Numéro de publication : **0 115 987**
**B1**

(12)

# FASCICULE DE BREVET EUROPÉEN

(45) Date de publication du fascicule du brevet :
**15.04.87**

(21) Numéro de dépôt : **84400169.3**

(22) Date de dépôt : **26.01.84**

(51) Int. Cl.⁴ : **G 01 N 29/02**

(54) **Procédé et appareil pour la détection de changements de composition au sein d'un milieu, à l'aide de l'ultra-son.**

(30) Priorité : **31.01.83 FR 8301427**

(43) Date de publication de la demande :
**15.08.84 Bulletin 84/33**

(45) Mention de la délivrance du brevet :
**15.04.87 Bulletin 87/16**

(84) Etats contractants désignés :
**DE GB NL**

(56) Documents cités :
**EP-A- 0 035 936**
**FR-A- 1 453 956**
**FR-A- 1 477 470**
**FR-A- 1 481 429**
**FR-A- 2 055 999**
**GB-A- 1 437 851**
**CONTROL AND INSTRUMENTATION, vol. 9, no. 7, juillet/août 1977, pages 22-23, Londres, GB "Measuring density on-line to nuclear industry standards"**

(73) Titulaire : **ELF FRANCE Société Anonyme dite:**
**137, Rue de l'Université**
**F-75340 Paris Cedex 07 (FR)**

(72) Inventeur : **Crambes, Michel**
**Servannay**
**F-38200 Villette de Vienne (FR)**

(74) Mandataire : **Kohn, Armand**
**5 Avenue Foch**
**F-92380 Garches (FR)**

## Description

La présente invention porte sur un procédé utilisant des ondes ultra-sonores, pour situer les changements de composition qui peuvent exister dans un milieu solide ou/et fluide. Elle rend également possible la détermination de l'épaisseur de la couche dont la composition diffère du reste du milieu. L'invention concerne, en outre, un appareil pour la réalisation de ce procédé. En particulier, elle vise un procédé et un appareil pour la détection, et éventuellement mesure, d'une couche d'émulsion eau-hydrocarbure au sein d'un hydrocarbure.

Il arrive souvent, dans l'industrie, qu'au cours d'une fabrication, ou pendant le stockage d'un produit, une ou plusieurs couches de compositions différentes se forment à certains niveaux et — pour des raisons techniques — on a besoin de savoir où elles sont situées dans la cuve, récipient ou bassin qui contient le produit en question. Cette connaissance permet notamment de soutirer, à coup sûr, uniquement la couche voulue. Une telle situation se présente par exemple dans la précipitation, dans l'eau, de pigments ou d'hydroxydes métalliques, tels que magnésie, alumine, hydrate ferrique, etc. ou bien de phosphates ou autres composés insolubles, décantant lentement : il est fort utile de connaître, à un moment donné, où se trouve le plan de séparation entre le liquide surnageant et la suspension de précipité. La question est particulièrement importante lorsque le fluide est traité dans un récipient ou appareil fermé, étanche, ne pouvant pas comporter de regards transparents, et surtout s'il est à une température élevée et — éventuellement — sous pression. Un tel cas se présente dans l'industrie pétrolière, notamment lors de l'opération de dessalage du pétrole brut. On sait que cette opération est effectuée dans des cylindres en acier de grandes dimensions, à parois isolées thermiquement ; le pétrole s'y trouve sous une pression de plusieurs bars et sa température peut atteindre 150 °C. L'eau présente, de l'ordre de 10 %, doit se déposer au fond, en recevant les gouttelettes d'eau salée émulsionnée dans le pétrole brut ; cette résolution de l'émulsion est en général produite par un champ électrique, alternatif, maintenu entre deux plans de grillage disposés longitudinalement dans le cylindre ; cependant, elle n'est pas complète et il reste, le plus souvent, une couche d'émulsion à un certain niveau entre l'eau et l'hydrocarbure séparés. Il est donc important de connaître ce niveau, pour ne pas évacuer de l'émulsion ensemble avec l'eau à rejeter ou avec le pétrole à recueillir. Or, étant donné la construction susindiquée du dessaleur, il n'est pas possible de constater de l'extérieur à quel niveau, et jusqu'où, s'étend la couche préexistante d'émulsion. Les méthodes classiques, à savoir système mécanique de mesure des niveaux ou les procédés optiques, y compris celui des lasers, ne peuvent donc pas convenir. La mesure de la constante diélectrique, qui peut se faire dans un appareil fermé, présente toutefois les inconvénients de fournir des variations peu sensibles à la répartition de l'eau salée, dans le pétrole, et d'être peu fidèle ; il était donc hautement souhaitable de trouver un procédé qui puisse convenir dans les cas évoqués ci-dessus.

La présente invention réalise ce souhait et permet de détecter avec précision et fidélité toute couche de composition différente au sein d'un milieu donné. Elle est applicable tant à des récipients ouverts que fermés, à parois en bons ou mauvais conducteurs du son.

Le nouveau procédé suivant l'invention est basé sur la détermination de la vitesse de transmission d'une onde ultrasonore par une colonne ou couche de milieu concerné, en une pluralité d'endroits ou niveaux. Comme la vitesse du son varie avec la composition du milieu, une variation sensible de cette vitesse indique l'endroit où la composition a changé.

Il est connu que la vitesse de propagation de l'ultrason dans l'eau est nettement plus grande que dans une huile lubrifiante, ce qui permet — par des mesures quantitatives — de doser la proportion de l'huile dans une émulsion aqueuse, lubrifiante. Ainsi voit-on par exemple, dans le brevet GB 1 437 851, qu'une onde à fréquence de 1 MHz se propage, à 50 °C, avec une vitesse de 1 540 m/s dans l'eau, contre 1 290 m/s dans le lubrifiant ; l'écart augmente avec la température pour aller respectivement de 1 550 à 1 150 aux environs de 70 °C. D'après le brevet cité cette circonstance est appliquée au dosage de l'huile dans une émulsion lubrifiante, aqueuse, c'est-à-dire à une opération statique, dans laquelle l'émission de l'onde ultrasonore et la mesure de la vitesse ultrasonique par captation de l'écho, renvoyé par un écran placé dans le liquide, se font toujours au même endroit.

Par contre, la présente invention applique la mesure de la vitesse de propagation de l'ultrason d'une manière nouvelle, cinétique, tout au long d'une couche ou d'une colonne verticale de milieu à étudier, pour explorer celle-ci et détecter l'endroit où commence un changement de composition révélé par un changement de la vitesse ultrasonique. Ainsi l'invention permet-elle de déterminer le profil de concentration en un constituant du milieu, suivant un axe de mesure.

Dans la suite de la présente description on décrit l'invention appliquée à des milieux liquides, mais il est entendu qu'elle peut être utilisée dans différents cas de milieux solides, liquides ou/et gazeux.

Le procédé suivant l'invention consiste à déterminer la vitesse de transmission d'une onde ultrasonore par une couche ou colonne d'un milieu, par la mesure du temps écoulé entre l'émission de l'onde ultrasonore et la réception de son écho renvoyé par un écran réflecteur placé dans le milieu à explorer ; ce procédé est caractérisé en ce que l'on effectue la détermination de la vitesse en une pluralité d'endroits de ladite couche ou milieu du milieu concerné, que l'écran réflecteur est placé le long d'une colonne du milieu, face à ladite pluralité d'endroits et que l'on déduit de la détermination, ainsi effectuée, le niveau auquel a lieu un changement de composition dans la couche ou colonne étudiée du milieu. Il est aisé d'afficher ou/et enregistrer, par des moyens électroniques, les vitesses ainsi mesurées, elles-mêmes ou leurs variations, pour déterminer ainsi les niveaux où apparaissent des changements de composition.

On peut, de cette façon, contrôler efficacement la décantation de différents précipités ou liquides, l'existence d'une couche d'émulsion dans des hydrocarbures, etc.

Le procédé de l'invention peut, en principe, être réalisé en continu, c'est-à-dire avec une série d'émetteurs et de récepteurs d'ultrasons fonctionnant en même temps, aux différents niveaux du récipient renfermant le liquide à étudier ; on obtient ainsi continuellement des réponses caractérisant les différents niveaux. Toutefois, au point de vue de l'appareillage impliqué, ce procédé est dispendieux, puisqu'il exige un assez grand nombre de sondes ultrasonores et d'équipements électroniques.

Une forme d'exécution plus économique du nouveau procédé consiste à déplacer verticalement, le long de la colonne liquide à contrôler, un système émetteur-récepteur d'ultrasons, en le faisant fonctionner dans une pluralité de positions.

Une solution encore plus pratique réside dans l'emploi d'un émetteur-récepteur d'ultrasons, avec son système électronique, fixes, envoyant l'onde de fréquence voulue sur un miroir que l'on déplace le long de la colonne liquide à surveiller.

Bien que l'exploration verticale d'une masse fluide corresponde à la tâche industrielle la plus fréquente, le procédé de l'invention peut également s'appliquer à l'investigation dans le sens horizontal ou incliné, s'il y a lieu.

La détection suivant l'invention peut se faire à l'aide d'ondes ultrasonores de fréquences très variées, monochromatiques ou polychromatiques. Etant donné cependant que les ultrasons de relativement faible fréquence exercent une action dispersante sur les matières qu'ils traversent, il est préférable d'utiliser, pour la réalisation de l'invention, des fréquences supérieures à 50 kHz ou, mieux, supérieures à 200 kHz. D'autre part, les ultrasons de très hautes fréquences étant plus fortement absorbés, c'est-à-dire atténués dans le milieu traversé, il est préférable de choisir, selon l'invention, des fréquences comprises dans l'intervalle de 200 kHz à 5 MHz ou mieux encore entre 500 kHz et 3 MHz. Dans le cas de liquides émulsionnables, par exemple des hydrocarbures avec de l'eau, des résultats particulièrement favorables sont obtenus avec des fréquences de 1,2 à 2,7 MHz.

L'appareil suivant l'invention comporte deux variantes décrites par les revendications 7 et 8.

Selon la nature des parois du récipient dans lequel on a à observer les variations de la composition à certains niveaux, la sonde peut être placée contre une de ces parois, ou bien doit se trouver dans un tube plongeant dans le contenu du récipient. La première de ces dispositions, la plus simple, est viable lorsque les parois sont en un matériau bon conducteur du son, notamment en métal nu. Ainsi, par exemple, la vitesse de l'ultrason transversalement dans l'acier étant environ quatre fois supérieure à sa vitesse dans l'eau, la sonde peut être placée contre la paroi d'acier extérieure d'un appareil ; elle peut être déplacée le long de cette paroi pour trouver le niveau de changement de composition. Mais un écran réflecteur doit alors être installé à l'intérieur du récipient, pour renvoyer l'écho vers le récepteur.

Si les parois du récipient sont en une matière mauvaise conductrice du son, par exemple bois, métal doublé d'un isolant thermique, ou bien si la paroi n'offre pas une surface plane dans l'axe de la mesure, la sonde doit être introduite à l'intérieur du récipient. Elle est alors de préférence placée dans un tube à parois métalliques, rempli d'un liquide transmettant bien l'ultrason, par exemple eau, glycérine, eau glycérinée, huile de silicone ou autre. Dans ce cas l'écran réflecteur doit être concentrique au tube à parois métalliques.

Les sondes ultrasonores étant bien connues dans l'art, on n'a pas à les décrire ici ; on rappellera seulement que leur transducteur, générateur de l'onde ultrasonore sous l'effet d'une tension électrique, est en matière piézoélectrique ou ferroélectrique, en particulier quartz ou titanate-zirconate de Pb.

En ce qui concerne l'écran réflecteur, il est de préférence en un matériau dont l'impédance acoustique assure une bonne réflexion des ultrasons dans le milieu étudié, tout en étant compatible avec ce milieu. Dans le cas d'une émulsion eau-pétrole brut, on peut utiliser, par exemple, un écran en acier inoxydable. Cet écran, de préférence de section hémi-circulaire, est coaxial avec le tube qui renferme la sonde ou/et le miroir. Il convient alors de maintenir la sonde ou/et le miroir, de façon à empêcher toute rotation autour de l'axe de déplacement de ces éléments. Il y a intérêt à ce que ni l'écran ni le tube n'aient un trop grand diamètre ; les meilleurs diamètres extérieurs pour le tube se situent entre 30 et 100 mm, et pour la distance entre le tube et l'écran 100 à 400 mm, ou mieux 150 à 350 mm.

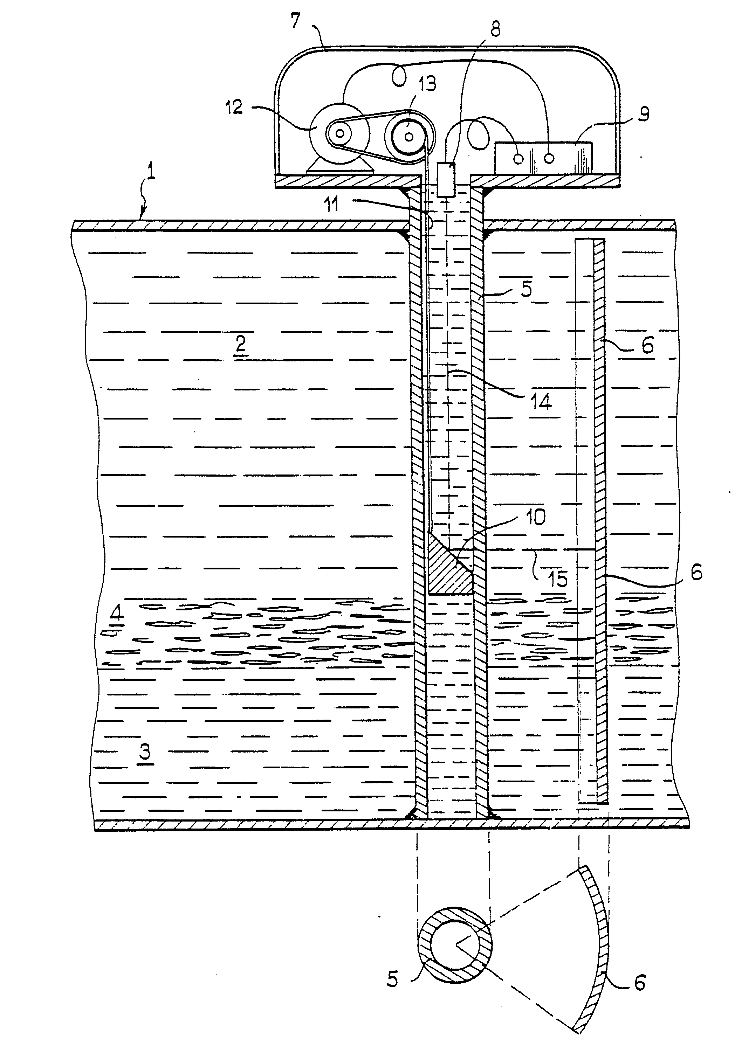

A titre d'exemple, on a représenté, sur la figure unique, annexée, un dispositif suivant l'invention, dans lequel la sonde ultrasonore est fixe, tandis qu'un miroir est déplaçable dans un tube le long d'une colonne verticale de liquide à étudier.

Sur le dessin, 1 représente schématiquement et partiellement un cylindre métallique renfermant un système de deux liquides, 2 et 3, entre lesquels se forme en 4 une phase à composition changée. C'est le cas notamment de l'intérieur d'un dessaleur du pétrole brut, dans lequel on trouve en 4 l'émulsion de l'eau dans le pétrole.

Entre les parois supérieure et inférieure du cylindre 1 on a fixé un tube d'acier 5 de 80 mm de diamètre extérieur, avec un certain dépassement vers le haut. D'autre part un écran 6 en acier inoxydable concentrique avec le tube 5, est placé à une distance de 20 cm de ce dernier sur environ 1/4 de cercle.

Dans l'extrémité supérieure du tube 5 est logé un émetteur-récepteur d'ultrasons ou sonde 8. Cette sonde comprend un cristal piézoélectrique et présente la structure connue en soi ; elle est reliée à un système électronique 9 comportant un générateur HF, un microprocesseur et l'asservissement du moteur 12. Le moteur, le système électronique et un treuil 13 sont montés dans un boîtier 7 à la partie supérieure du tube 5.

Le tube 5 est rempli d'huile de silicone, dans laquelle est immergé un miroir 10 en acier inoxydable, taillé à 45° par rapport à l'axe du tube. Conformément à une variante de l'appareil selon l'invention le miroir 10 est attaché à un câble 11 relié au treuil 13. En faisant tourner le moteur 12, on met en action le treuil 13 qui tire vers le haut ou fait descendre le miroir 10, en explorant ainsi toute la hauteur de la couche liquide dans le cylindre 1. Pendant ce temps l'émetteur 8, également immergé dans l'huile de silicone, envoie des ondes ultrasonores, suivant l'axe du tube 5, comme figuré par les traits discontinus 14.

La face supérieure du miroir faisant un angle de 45° avec l'axe du tube, l'onde, réfléchie sur elle suivant 15, est perpendiculaire à l'écran réflecteur 6. Le jeu de la réflexion fait ainsi que l'on retrouve l'écho dans le récepteur 8 suivant la ligne 14. La vitesse de l'ultrason dans le trajet 15 est calculée, de manière connue, par le système électronique 9. On est donc rapidement renseigné sur un changement de composition dans la région 4 : lorsque le miroir 10 arrive à ce niveau, la vitesse sonique affichée est nettement différente de celle que l'on lisait au niveau du liquide 2. On constate en effet qu'avec des ultrasons de 2 MHz on trouve une vitesse de propagation de 730 m/s dans un pétrole brut à 150 °C, alors que la vitesse s'élève à 835 m/s à la même température, lorsque 10 % d'eau est dispersée dans ce pétrole brut. Pour une émulsion plus forte, notamment de 30 % la vitesse atteint 1 025 m/s. il est donc aisé de reconnaître le niveau où commence l'émulsion de l'eau dans l'huile. Les choses se passent de façon similaire lorsque le changement de la composition concerne un précipité ou une autre phase liquide décantée.

## Revendications

1. Procédé pour détecter un changement de composition au sein d'un milieu (2, 3, 4), qui consiste à déterminer la vitesse de transmission d'une onde ultrasonore par une couche ou colonne de ce milieu, cette détermination étant effectuée par la mesure du temps écoulé entre l'émission de l'onde ultrasonore et la réception de son écho renvoyé par un écran (6) réflecteur, placé dans le milieu à explorer, le procédé étant caractérisé en ce que : la détermination est effectuée en une pluralité d'endroits de ladite couche ou colonne du milieu ; l'écran (6) est placé le long d'une colonne de ce milieu, face à la pluralité des endroits où l'on effectue la détermination ; et que l'on déduit de celle-ci le niveau auquel a lieu le changement de composition dans la couche ou colonne du milieu.

2. Procédé suivant la revendication 1, caractérisé en ce que des moyens (8) d'émission et de réception d'ultrason sont déplacés devant la pluralité d'endroits ou niveaux, pour y effectuer successivement la détermination de la vitesse de transmission de l'onde.

3. Procédé suivant la revendication 1 ou 2, caractérisé en ce que l'on déplace un miroir (10), réfléchissant l'onde ultrasonore, émise par des moyens fixes d'émission et de réception d'ultrasons (8), devant la pluralité d'endroits ou niveaux, pour y effectuer ladite détermination.

4. Procédé suivant une des revendications précédentes, caractérisé en ce que l'onde ultrasonore utilisée a une fréquence de 500 Khz à 3 MHz.

5. Procédé suivant une des revendications précédentes, appliqué à un milieu renfermant de l'hydrocarbure et de l'eau, caractérisé en ce que l'on détermine le profil de concentration de l'eau dans l'hydrocarbure, le long de l'écran placé dans un récipient contenant ces fluides.

6. Procédé suivant la revendication 5, caractérisé en ce que l'onde ultrasonore employée est à la fréquence de 1,2 à 2,7 MHz.

7. Appareil pour la détection d'un changement de composition au sein d'un milieu par la détermination de la vitesse de transmission d'une onde ultrasonore et mettant en œuvre le procédé selon la revendication 1, l'appareil comportant un écran (6) réflecteur, plongé dans ce milieu, et un émetteur-récepteur (8) de l'onde ultrasonore, dont les réponses sont traitées par un système électronique (9), caractérisé en ce qu'il comporte des moyens moteurs (12, 13) pour déplacer l'émetteur-récepteur (8) le long d'une colonne de milieu à explorer (2, 3, 4), et en ce que l'écran (6) délimite cette colonne.

8. Appareil pour la détection d'un changement de composition au sein d'un milieu par la détermination de la vitesse de transmission d'une onde ultrasonore et mettant en œuvre le procédé selon la revendication 1, l'appareil comportant un écran (6) réflecteur, plongé dans ce milieu, et un émetteur-récepteur (8) de l'onde ultrasonore, dont les réponses sont traitées par un système électronique (9), caractérisé en ce qu'il comporte des moyens (11, 12, 13) pour déplacer un réflecteur d'ultrasons (10) le long de l'écran réflecteur (6), cet écran étant placé concentriquement face à un tube (5), dans lequel est déplacé le réflecteur d'ultrasons (10), et délimitant avec ce tube (5) une colonne du milieu.

9. Appareil suivant la revendication 7, caractérisé en ce que l'émetteur-récepteur (8) est mobile dans un tube (5) dont le diamètre est de 30 à 100 mm, ce tube étant concentrique avec l'écran réflecteur (6) dont il est distant de 100 à 400 mm.

10. Appareil suivant la revendication 8, caractérisé en ce que le réflecteur d'ultrasons (10) est un miroir, que le tube (5) présente un diamètre de 30 à 100 mm, et qu'il est placé à une distance de 100 à 400 mm de l'écran réflecteur (6).

11. Appareil suivant la revendication 9 ou 10, caractérisé en ce que le tube (5) est rempli d'un liquide bon conducteur de l'ultrason, en particulier d'une huile de silicone.

## Claims

1. Process for detecting a change of composition in a medium (2, 3, 4), which consists in determining the speed of transmission of an ultrasonic wave through a layer or column of the medium, this determination being effected by measurement of the time elapsed between emission of the ultrasonic wave and reception of its echo produced by a reflector screen (6) placed in the medium being studied, the process being characterised in that the determination is effected at a plurality of locations in the layer or column of the medium, the screen (6) is placed along a column of the medium opposite the plurality of locations where the determination is effected and that the level at which the change in composition in the layer or column of the medium takes place is deduced therefrom.

2. Process according to claim 1, characterised in that ultrasound emission and reception means (8) are displaced past the plurality of locations or levels, for successively effecting the determination of the speed of transmission of the wave.

3. Process according to claim 1 or 2, characterised in that a mirror (10), reflecting the ultrasonic wave emitted by fixed ultrasound emission and reception means (8) is displaced past the plurality of locations or levels, in order to effect such determination.

4. Process according to any of the preceding claims, characterised in that the ultrasonic wave utilized has a frequency of 500 kHz to 3 MHz.

5. Process according to any of the preceding claims, applied to a medium comprising a hydrocarbon and water, characterised in that the concentration profile of the water in the hydrocarbon is determined along the screen placed in a receptacle containing these fluids.

6. Process according to claim 5, characterised in that the ultrasonic wave employed has a frequency of 1.2 to 2.7 MHz.

7. Apparatus for the detection of a change of composition in a medium by determination of the speed of transmission of an ultrasonic wave and carrying out the process according to claim 1, the apparatus comprising a reflector screen (6) immersed in the medium and an ultrasonic wave emitter-receptor (8), the responses of which are processed by an electronic system (9), characterised by comprising motor means (12, 13) for displacing the emitter-receptor (8) along a column of the medium being studied (2, 3, 4) and in that the screen (6) limits this column.

8. Apparatus for the detection of a change of composition in a medium by determination of the speed of transmission of an ultrasonic wave and carrying out the process according to claim 1, the apparatus comprising a reflector screen (6) immersed in the medium and an ultrasonic wave emitter-receptor (8), the responses of which are processed by an electronic system (9), characterised by comprising means (11, 12, 13) for displacing an ultrasound reflector (10) along the reflector screen (6), the screen being placed concentrically with a tube (5) in which the ultrasound reflector (10) is displaced and delimiting with this tube (5) a column of the medium.

9. Apparatus according to claim 7, characterised in that the emitter-receptor (8) is movable in a tube (5), the diameter of which is 30 to 100 mm, the tube being concentric with the reflector screen (6) from which it is spaced by 100 to 400 mm.

10. Apparatus according to claim 8, characterised in that the ultrasound reflector (10) is a mirror, the tube (5) has a diameter of 30 to 100 mm and is placed at a distance of 100 to 400 mm from the reflector screen (6).

11. Apparatus according to claim 9 or 10, characterised in that the tube (5) is filled with a liquid which is a good conductor of ultrasound, in particular a silicone oil.

## Patentansprüche

1. Verfahren für die Detektion von Zusammensetzungsänderungen eines Fluids (2, 3, 4), bei dem die Übertragungsgeschwindigkeit einer Ultraschallwelle durch eine Schicht oder eine Säule des Fluids bestimmt wird, und bei dem die Bestimmung durch Messen der zwischen der Emission der Ultraschallwelle und dem Empfang ihres von einer reflektierenden Abschirmung (6), die im zu untersuchenden Fluid sich befindet, zurückgestrahlten Echos verstrichenen Zeit erfolgt, dadurch gekennzeichnet, daß die Bestimmung an einer Mehrzahl von Stellen des Fluids der Schicht oder der Säule erfolgt, daß die Abschirmung (6) längs der Fluidsäule der Mehrzahl von Stellen zugewandt vorgesehen ist, an denen die Bestimmung durchgeführt wird, und daß man hieraus die Höhe ableitet, an der die Zusammensetzungsänderung in der Schicht oder der Säule des Fluids stattfindet.

2. Verfahren nach Anspruch 1, dadurch gekennzeichnet, daß Einrichtungen (8) zur Emission und zum Empfang des Ultraschalls an der Mehrzahl von Stellen oder Höhen vorbeigeschoben werden, um dort sukzessiv die Bestimmung der Übertragungsgeschwindigkeit der Welle vorzunehmen.

3. Verfahren nach Anspruch 1 oder 2, dadurch gekennzeichnet, daß man einen Spiegel (10), der die Ultraschallwelle reflektiert, die mittels festen Einrichtungen (8) zur Emission und zum Empfang des Ultraschalls abgegeben worden ist, an der Mehrzahl von Stellen oder Höhen vorbeiführt, um dort die Bestimmung vorzunehmen.

4. Verfahren nach einem der vorangehenden Ansprüche, dadurch gekennzeichnet, daß die verwendete Ultraschallwelle eine Frequenz von 500 kHz bis 3 MHz hat.

5. Verfahren nach einem der vorangehenden Ansprüche, angewandt auf ein eingeschlossenes Fluid aus Kohlenwasserstoff und Wasser, dadurch gekennzeichnet, daß man das Konzentrationsprofil des Wassers im Kohlenwasserstoff längs der Abschirmung bestimmt, die sich in einem die Fluide enthaltenden Behälter befindet.

6. Verfahren nach Anspruch 5, dadurch gekennzeichnet, daß die angewandte Ultraschallwelle eine Frequenz von 1,2 bis 2,7 MHz hat.

7. Vorrichtung für die Detektion einer Zusammensetzungsänderung eines Fluids durch Bestimmen der Übertragungsgeschwindigkeit einer Ultraschallwelle und zur Durchführung des Verfahrens nach Anspruch 1, die eine reflektierende Abschirmung (6), die in das Fluid eingetaucht ist, und einen Emitter-Empfänger (8) für die Ultraschallwelle aufweist, dessen Ansprechsignale mittels eines elektronischen Systems (9) aufgezeichnet werden, dadurch gekennzeichnet, daß Motoreinrichtungen (12, 13) zum Verschieben des Emitters-Empfängers (8) längs einer Säule des zu untersuchenden Fluids (2, 3, 4) vorgesehen sind, und daß die Abschirmung (6) die Säule begrenzt.

8. Vorrichtung für die Detektion einer Zusammensetzungsänderung eines Fluids durch Bestimmen der Übertragungsgeschwindigkeit einer Ultraschallwelle und zur Durchführung des Verfahrens nach Anspruch 1, die eine reflektierende Abschirmung (6), die in das Fluid eingetaucht ist, und einen Emitter-Empfänger (8) für die Ultraschallwelle aufweist, dessen Ansprechsignale von einem elektronischen System (9) aufgezeichnet werden, dadurch gekennzeichnet, daß Einrichtungen (11, 12, 13) zum Verschieben eines Ultraschallreflektors (10) längs der reflektierenden Abschirmung (6) vorgesehen sind, und daß die Abschirmung konzentrisch einem Rohr (5) zugewandt angeordnet ist, in dem der Ultraschallreflektor (10) verschoben wird und der mit dem Rohr (5) eine Fluidsäule begrenzt.

9. Vorrichtung nach Anspruch 7, dadurch gekennzeichnet, daß der Emitter-Empfänger (8) im Rohr (5) beweglich ist, dessen Durchmesser 30-100 mm beträgt und daß das Rohr konzentrisch zu der reflektierenden Abschirmung (6) ist, die einen Abstand von 100-400 mm hat.

10. Vorrichtung nach Anspruch 8, dadurch gekennzeichnet, daß der Ultraschallreflektor (10) ein Spiegel ist, daß das Rohr (5) einen Durchmesser von 30-100 mm hat und daß es in einem Abstand von 100-400 mm von der reflektierenden Abschirmung (6) angeordnet ist.

11. Vorrichtung nach Anspruch 9 oder 10, dadurch gekennzeichnet, daß das Rohr (5) mit einer den Ultraschall gut leitenden Flüssigkeit, insbesondere Silikonöl, gefüllt ist.